# EUROPEAN PATENT APPLICATION

(11) **EP 1 367 581 A2**
(43) Date of publication of application: **03.12.2003**
(21) Application number: 03253407.5
(22) Date of filing: 30.05.2003
(51) Int. Cl.: G11B 20/00, H04N 5/913

(54) **Information recording/reading apparatus and method**

(30) Priority: 31.05.2002 JP 2002159796
(71) Applicant: SONY CORPORATION, Tokyo 141 (JP)
(72) Inventor: Kitani, Satoshi, c/o Sony Corporation, Tokyo (JP)
(74) Representative: DeVile, Jonathan Mark, Dr.

(57) **Abstract**

A mask function that replaces at least part of information, such as video data, audio data, and sub-picture data, with invalid data is provided in an information recording/reproducing apparatus. In one example application a personal computer (PC) and the information recording/reproducing apparatus are provided with an arrangement of features which encrypt the information at a sending end, the information is then exchanged between the sending end and a receiving end, and decrypted at the receiving end. Authentication is performed between the PC and the information recording/reproducing apparatus. If the authentication succeeds, then the information is transferred from one end where the information is encrypted to the other end where the information is decrypted. However if the authentication fails, the information recording/reproducing apparatus applies the mask function to the information when read from a storage medium or to the information to be written and transferred from the PC to the storage medium.

## Description

### BACKGROUND OF THE INVENTION

### 1. Field of the Invention

The present invention relates to an information-reading apparatus for reading information from a storage medium, such as, for example an optical disk. The present invention also relates to an information-recording apparatus for recording information to a storage medium, information reading and recording methods, a program, and a storage medium.

### 2. Description of the Related Art

In storage media, such as DVDs (Digital Versatile Discs), a massive amount of information, such as an entire feature film including a large amount of moving pictures and audios, is capable of being stored as digital information. Since it has been possible to store the moving pictures, audios, and the like as digital information, copyright protection against piracy has become more and more important.

CSS (Content Scramble System) is a copyright protection technology, which is taken advantage of by DVD-Videos. CSS can be applied only to DVD-ROMs, and the application of CSS on recordable DVDs, such as DVD-Rs, DVD-RWs, DVD+Rs, and DVD+RWs, is banned under the CSS contract. Therefore, bit-by-bit copy from DVD-Video to any of the above recordable DVDs is unauthorized.

This type of copying is unauthorized also under CPPM (Content Protection for Pre-Recorded Media), which is another copyright protection technology taken advantage of by DVD-Audios.

Software programs for decrypting the CSS encryption are distributed on the Internet. Use of these programs enables DVD-Video encryption codes to be decrypted and then the plaintexts obtained by decrypting the encryption codes to be written to recordable DVDs. Hence, measures to prevent unauthorized copying are expected. For example, one measure is considered as follows: digital watermark information is embedded in video and audio data in advance; when the data is stored or played back, the digital watermark information is detected to take advantage of unauthorized copying prevention.

However, implementing a circuit for detecting this digital watermark information in a recording/reproducing apparatus increases the circuit scale and the cost. In addition, detecting the digital watermark information is a time-consuming process, which prevents primary tasks of a recording/reproducing apparatus, i.e. playback and recording.

Although there has been no method so far to solve the above problems, the following Japanese Unexamined Patent Application Publications attempting to solve the problems are disclosed.
(1) Japanese Unexamined Patent Application Publication No. 2000-115727
   In this patent is disclosed a method for causing a DVD drive to correctly detect digital watermark information embedded in video and audio information in advance. When unauthorized copying is determined based on the digital watermark information, error statuses (notifications of unauthorized reading and writing) are returned to a computer. However, in reality, there are no standard error status definitions for unauthorized copying notifications, which make it difficult to establish compatibility with existing computers. This indicates the computer receives an unexpected error from the drive, which initiates the malfunction or abnormal termination of an application program. Furthermore, a requirement of detecting the digital watermark information increases the cost.
(2) Japanese Unexamined Patent Application Publication No. 2001-210013
   In this patent is disclosed a method for realizing inexpensive detection of the digital watermark in the DVD drive. According to this patent, detection of unauthorized copying stops the output of video and audio signals. However, there are no concrete descriptions of how to "stop" copying.
(3) Japanese Unexamined Patent Application Publication No. 2000-173177
   In this patent is disclosed a method in which an output limit is applied to a DVD player when unauthorized copying is determined based on the digital watermark detected by the DVD player. However, the output limit processing under the control of a CPU (Central Processing Unit) subsequent to the processing at an MPEG decoder is susceptible to yield to unauthorized modifications, such as wiring modifications and firmware modifications. This is the same principle applied to invalidate a regional control for the DVD player.
(4) Japanese Unexamined Patent Application Publications No. 2000-23088 and 2000-23089
   In these patents are disclosed methods in which playback and recording are limited by a DVD recorder when unauthorized copying is determined based on the digital watermark detected by the DVD recorder. These methods have also the same problem as the problem with the method in (3).

As described above, there are the following problems: no appropriate copyright protection system is established in the recordable DVD; full protection cannot be guaranteed even in the DVD-ROM under the CSS protection because of software programs that break the CSS protection codes; the processing load and the cost increase due to the introduction of digital watermark information.

### SUMMARY OF THE INVENTION

Various aspects and features of the present invention are defined in the appended claims.

Embodiments of the present invention can provide to provide an information reading apparatus, an information recording apparatus, an information reading method, an information writing method, a program, and a storage medium which realize the protection of the content on a media of any sort that can be read or read/written and which reduce an increase in the cost and the processing load, occurring due to the realization of the protection, to a negligible value.

To do this end, according to a first aspect of the present invention, there is provided an information reading apparatus including a reading unit for reading information from a storage medium storing information; a read information processing unit for replacing at least part of the information read by the reading unit with invalid data; and a transferring unit for transferring the information, at least partially replaced with the invalid data, to an electronic apparatus that requests reading of information from the storage medium.

According to a second aspect of the present invention, an information recording apparatus includes a recording unit for recording information to a storage medium and a recording information processing unit for replacing at least part of the information to be recorded on the storage medium by the recording unit with invalid data.

According to a third aspect of the present invention, an optical reproducing apparatus includes an optical pickup unit for reading information from an optical storage medium storing information; a data filter for replacing at least part of information read by the optical pickup unit with invalid data; and an interface for transferring the information at least partially replaced with the invalid data to an electronic apparatus that requests reading of information from the optical storage medium.

According to a fourth aspect of the present invention, an optical recording apparatus includes an interface for receiving information from an electronic apparatus that requests recording of information; a data filter for replacing at least part of the received information with invalid data; and an optical head unit for recording the information at least partially replaced with the invalid data to an optical storage medium.

According to a fifth aspect of the present invention, an information reading method includes a reading step of reading information from a storage medium storing information; a read information processing step of processing the information read at the reading step so that playback of the information is invalidated at an electronic apparatus requesting reading of information; and a transferring step of transferring the processed information to the electronic apparatus.

According to a sixth aspect of the present invention, an information recording method includes a recording step of recording information to a storage medium and a recording information processing step of processing the information to be recorded so that playback of the information to be recorded on the storage medium is invalidated.

According to a seventh aspect of the present invention, a program causes a computer to realize functions of performing authentication with an information recording apparatus recording information including video and/or audio to a storage medium; encrypting at least part of the information to be transferred to the information recording apparatus when the authentication succeeds; and transferring the encrypted information to the information recording apparatus so that the encrypted information is recorded on the storage medium.

According to an eighth aspect of the present invention, a program causes a computer to realize functions of performing authentication with an information reading apparatus reading information including video and/or audio from a storage medium and decrypting encrypted information transferred from the information reading apparatus when the authentication succeeds.

According to a ninth aspect of the present invention, a computer-readable storage medium contains a program for causing a computer to realize functions of performing authentication with an information recording apparatus recording information including video and/or audio to a storage medium; encrypting at least part of the information to be transferred to the information recording apparatus when the authentication succeeds; and transferring the encrypted information to the information recording apparatus so that the encrypted information is recorded on the storage medium.

According to a tenth aspect of the present invention, a computer-readable storage medium contains a program for causing a computer to realize functions of performing authentication with an information reading apparatus reading information including video and/or audio from a storage medium and decrypting encrypted information transferred from the information reading apparatus when the authentication succeeds.

### BRIEF DESCRIPTION OF THE DRAWINGS

The invention will now be described by way of example with reference to the accompanying drawings, throughout which like parts are referred to by like references, and in which:
Fig. 1 is a block diagram showing the construction of an information recording/reproducing apparatus according to a first embodiment of the present invention;
Fig. 2 is a block diagram showing features of a reading data filter;
Fig. 3 is a flowchart of selective mask processing to a pack;
Fig. 4 is a diagram showing an example structure of DVD video data;
Fig. 5 is a diagram showing an example region to be masked of the pack;
Fig. 6 is a diagram showing another example region to be masked of the pack;
Fig. 7 is a block diagram showing features of a writing data filter;
Fig. 8 is a block diagram showing the construction of another DVD drive according to the first embodiment;
Fig. 9 is a block diagram showing the construction of still another DVD drive according to the first embodiment;
Fig. 10 is a block diagram showing the construction of a DVD drive and a PC according to a second embodiment of the present invention;
Fig. 11 is a block diagram showing features of a reading data controller (encryption);
Fig. 12 is a block diagram showing features of a writing data controller (decryption);
Fig. 13 is a block diagram showing a procedure to perform authentication between the PC and the DVD drive and generate an authentication key;
Fig. 14 is an illustration showing command exchanging between the PC and the DVD drive when the authentication process succeeds;
Fig. 15 is a diagram showing one method to generate a content key after the authentication key is generated;
Fig. 16 is an illustration showing command exchanging between the PC and the DVD drive during reading processing;
Fig. 17 is an illustration showing command exchanging between the PC and the DVD drive during writing processing;
Fig. 18 is a block diagram showing another method to generate the content key after the authentication key is generated;
Fig. 19 is a diagram showing a first example method to verify the validity of a key Kₓ;
Fig. 20 is a diagram showing a second example method to verify the validity of the key Kₓ;
Fig. 21 is a diagram showing a third example method to verify the validity of the key Kₓ;
Fig. 22 is a diagram showing a fourth example method to verify the validity of the key Kₓ; and
Fig. 23 is a diagram showing the structure of a sector.

### DESCRIPTION OF THE PREFERRED EMBODIMENTS

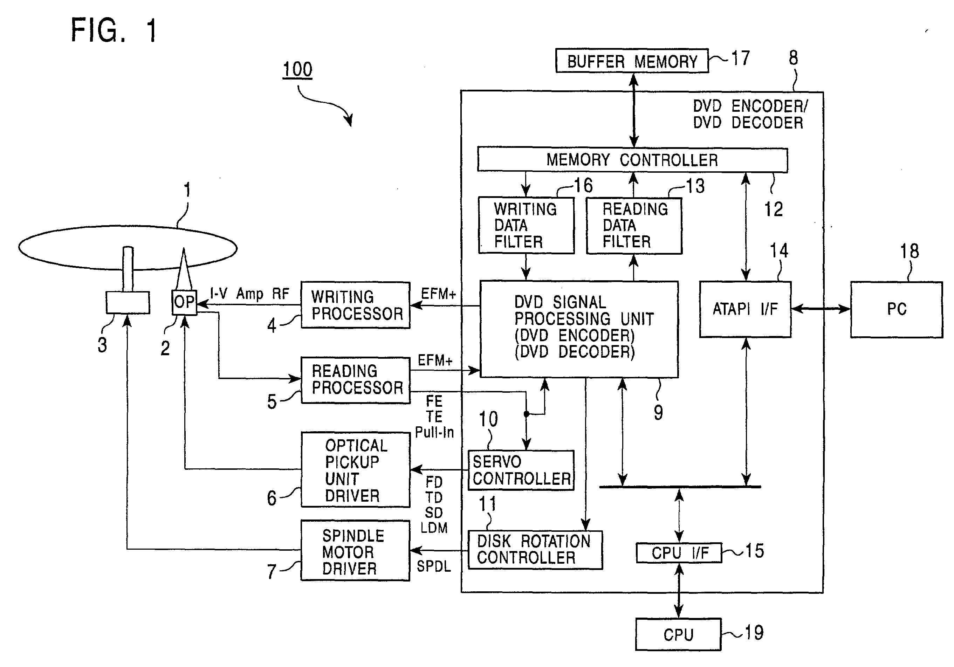

Fig. 1 shows the construction of a DVD drive 100, which is an information recording/reproducing apparatus according to one embodiment of the present invention.

The DVD drive 100 can read data from and write data to a DVD disk 1 (hereinafter, referred to as "disk 1").

The disk 1 includes a DVD-Video Disc (DVD-ROM) protected under the CSS, a DVD-Video Disc (DVD-ROM/-R/-RW/+R/+RW) unprotected under the CSS, a disk created by a user, and a copy disk authorized as private use.

An optical pickup unit 2 (hereinafter, referred to as OP) includes an object lens, a device for driving the object lens in biaxial directions, a laser diode, an optical detector, and an OP feed mechanism.

A spindle motor 3 applies the rotation drive to the disk 1.

A writing processor 4 controls the writing laser power over the disk 1 based on DVD encoded EFM+ (Eight to Fourteen Modulation Plus) signal.

A reading processor 5 produces a DVD reading EFM+ signal, and a FE (Focusing Error) signal, a TE (Tracking Error) signal, and a Pull-in signal based on an RF (Radio Frequency) signal output from the OP 2. The FE signal, the TE signal, and the Pull-in signal serve for servo control.

The OP driver 6 includes driver ICs that each drive the respective motor for focus, tracking, sled, and loading.

A spindle motor driver 7 drives the spindle motor 3.

A DVD encoder/decoder 8 is a DVD core LSI (Large Scale Integrated) circuit in which the features of a DVD-signal processing unit 9, a servo controller 10, a disk rotation controller 11, a memory controller 12, a reading data filter 13, an ATAPI I/F (AT Attachment with Packet Interface) 14, a CPU I/F 15, and a writing data filter 16 are contained in a single semiconductor package.

The DVD-signal processing unit 9 includes an RS-PC (Reed Solomon Product Code) encoder/decoder, an ID processing unit for address detection, an EFM+ modulation/demodulation circuit, and a wobble detector.

When decoding is performed, data is stored via the memory controller 12 in a buffer memory 17 in units of 32 kilobytes as the output of the DVD encoder/decoder 8. The data stored in the buffer memory 17 is transferred via the memory controller 12 and the ATAPI I/F 14 to a PC (Personal Computer) 18 in units of 2 kilobytes.

When encoding is performed, data is transferred as the input of the DVD encoder/decoder 8 from the PC 18 to the buffer memory 17 via the ATAPI I/F 14 and the memory controller 12 in units of 2 kilobytes. When the size of the data stored in the buffer memory 17 reaches 32 kilobytes, which is the size of the data block writing to the disk 1, the memory controller 12 transfers the data to the DVD-signal processing unit 9.

The servo controller 10 performs servo-control signal processing including focus, tracking, and sled, as well as loading control.

The disk rotation controller 11 controls rotation of the disk 1 based on the signal fed from the DVD-signal processing unit 9.

The memory controller 12 arbitrates the memory access.

The reading data filter 13 performs the mask processing, such as replacing at least part of the content information read from the disk 1 with invalid data, so that playback of the content information is invalidated on the PC 18.

The writing data filter 16 performs the mask processing, such as replacing at least part of the content information to be written to the disk 1 with invalid data, so that playback of the content information is invalidated on the PC 18.

The ATAPI I/F 14 serves as an interface with a host, i.e. the PC 18. In place of the ATAPI, the interface may be SCSI (Small Computer System Interface), USB (Universal Serial Bus), or IEEE (Institute of Electrical and Electronic Engineers) 1394.

The CPU I/F 15 serves as an interface between the DVD encoder/decoder 8 and the CPU 19.

The CPU 19 controls the DVD drive 100.

The buffer memory 17 serves as a fast read-write space utilized for DVD signal processing and efficient high-speed data transfer between the PC 18 and the DVD drive 100.

The PC 18 serves as the host connected to the DVD drive 100.

The operation of the DVD drive 100 will be described.

First, each servo operation during recording/playback will be described.

When the disk 1 is loaded in the DVD drive 100, the spindle motor 3 rotates the disk 1. The reading processor 5 produces the FE signal and the TE signal based on the output from the OP 2. The FE and TE signals are fed to the servo controller 10 where a focus drive signal (FD signal), a tracking drive signal (TD signal), and a sled drive signal (SD signal) are produced based on the FE and TE signals. The OP driver 6 amplifies the generated FD signal, TD signal, and SD signals, which are then fed back to the OP 2, thus forming each of the servo loops of focus, tracking, and sled.

The reading processor 5 converts the RF signal output from the OP 2 into an EFM+ modulated signal, which is fed into the DVD-signal processing unit 9. The DVD-signal processing unit 9 produces a clock signal using a PLL (Phase Lock Loop) from the EFM+ modulated signal and demodulates the EFM+ modulated signal using the clock signal to restore the digital data.

The DVD-signal processing unit 9 measures the frequency of the clock signal to feed a control signal to the disk rotation control unit 11. The disk rotation controller 11 produces a spindle control signal based on the control signal from the DVD-signal processing unit 9. The spindle motor driver 7 amplifies this spindle control signal to a motor drive signal, which is fed to the spindle motor 3 to operate the spindle servo.

Since the EFM+ signal cannot be obtained from the blank disk 1, the DVD-signal processing unit 9 deals with a wobble signal, instead of the EFM+ signal, detected from a wobble group disposed on the blank disk 1 to provide the control signal to the disk rotation control unit 11, thus causing the spindle servo to operate.

Next, the operation will be described when playback of the disk 1 is performed.

The PC 18 issues a READ command along with LBA (Logical Block Address) of the disk 1 representing the location of the data to be read and the size thereof to the CPU 19 via the ATAPI I/F 14 and the CPU I/F 15.

When determining the instruction of the read command is executable, the CPU 19 determines whether the data having the specified data length is stored in the buffer memory 17; when the determination is affirmative, the data is transferred via the ATAPI I/F 14 to the PC 18 in units of 2 kilobyte sectors; otherwise, the CPU 19 computes the PSN (Physical Sector Number), i.e. the actual address of the data to be read on the disk 1 corresponding to the LBA. This permits position control that moves the object lens of the OP 2 to the read-start position of the disk 1.

The DVD-signal processing unit 9 deals with the data read from the PSN in the following manner.

The DVD-signal processing unit 9 performs DVD decoding processing in units of ECC blocks, i.e. 16 sectors. The DVD-decoded sixteen sectors of data are stored in the buffer memory 17 via the reading data filter 13 and the memory controller 12.

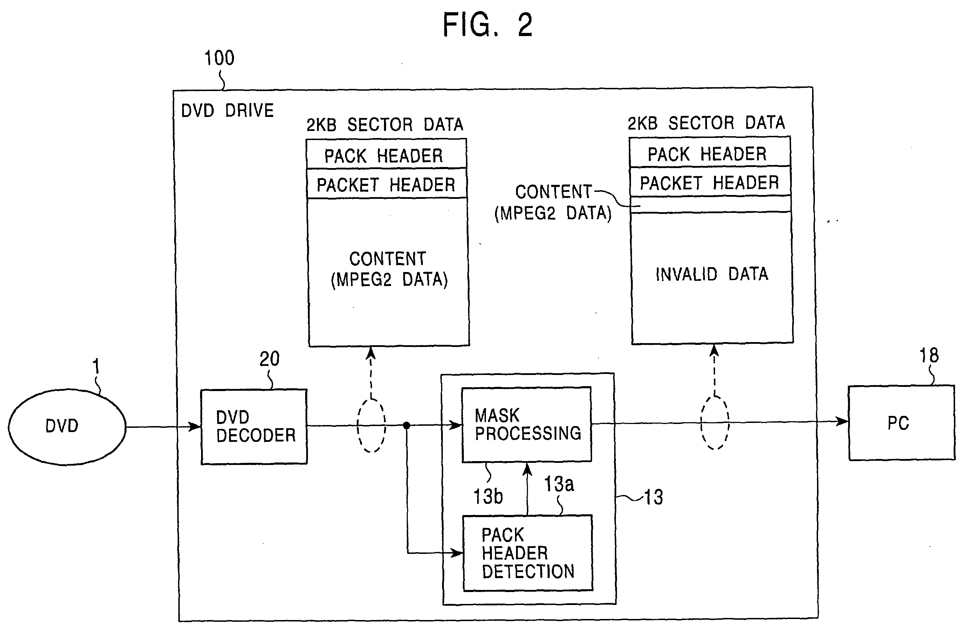

Fig. 2 shows how the reading data filter 13 works.

The reading data filter 13 includes a pack-header detecting unit 13a and a mask-processing unit 13b. The pack-header detecting unit 13a reads the pack header of the data undergoing the DVD decoding processing at a DVD decoder 20 to determine the type of the pack. The mask-processing unit 13b performs the mask processing, such as replacing a specific type of pack determined at the pack-header detecting unit 13a with invalid data. The pack output from the reading data filter 13 is stored via the memory controller 12 in the buffer memory 17, which is then transferred to the PC 18.

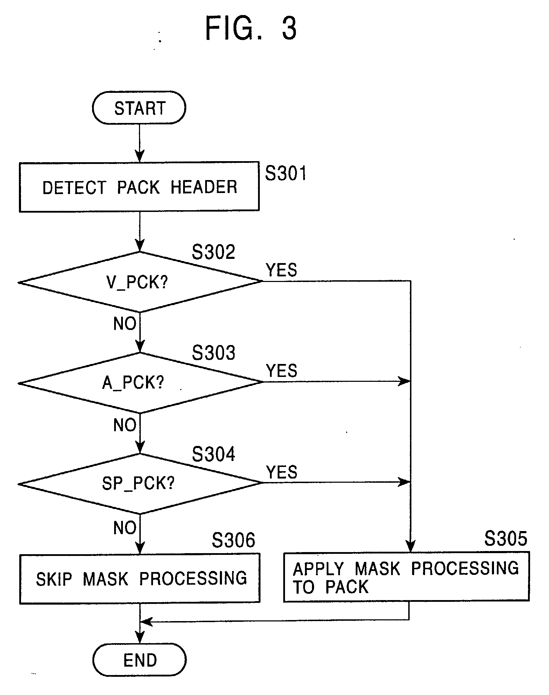

Fig. 3 shows the flow of the selective mask processing to the pack.

The pack-header detecting unit 13a reads the pack header (step S301). When the pack type is determined, based on the read pack header, as any one of the video, audio, and sub-picture, which means when the affirmative determination is made at any one of steps S302 to S304, the mask processing is applied to the pack. When the pack type is determined as none of the above, which means that the pack type is a control information type, the pack without undergoing the mask processing is transferred to the buffer memory 17 (step S306).

Alternatively, the pack header may be detected by finding, based on CPR_MAI (Copyright Management Information), the presence of a pack to be masked of the sector. In addition, when MPEG (Motion Picture Experts Group) data is stored as video data, video pack can be specified via MPEG stream analysis.

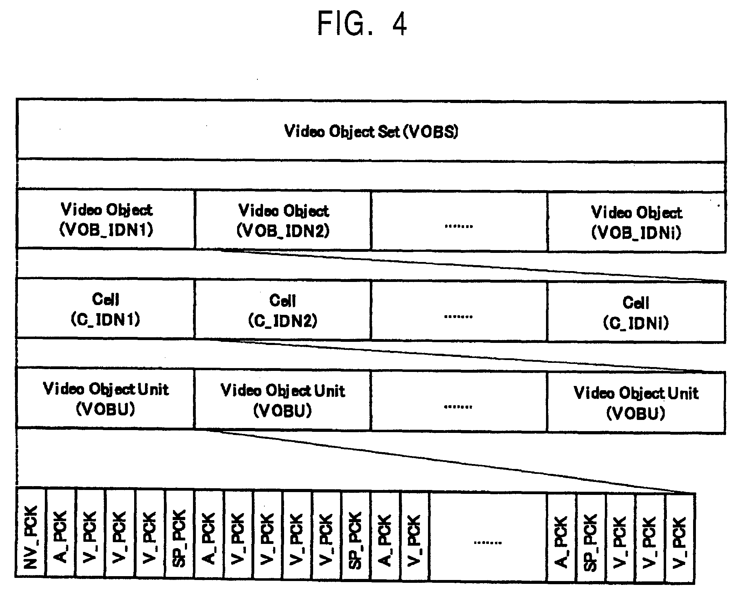

The mask processing will be described in detail using DVD video data as an example. Fig. 4 shows an example structure of MPEG video data.

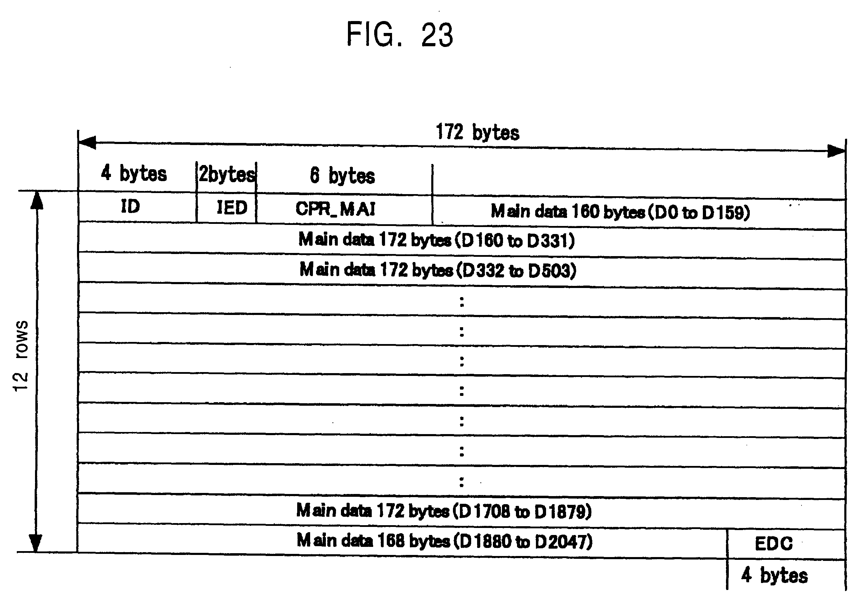

The DVD video data includes at least one VOB (Video Object) that includes at least one cell that includes at least one VOBU (Video Object Unit). The VOBU includes several packs, each of which consists of two-kilobyte sectors of data. Fig. 23 shows the structure of one sector.

Control information NV_PCK (Navigation Pack) is provided on the head of the VOBU. After the control information NV_PCK, at least one of each of the following is provided: V_PCK (Video Pack), A_PCK (Audio Pack), and SP_PCK (Sub-Picture Pack).

The V_PCK, the A_PCK, and the SP_PCK are the packs to be masked. The NV_PCK contains address and time information on the packs required for controlling playback of the disk 1.

As shown in Fig, 5, V_PCK, A_PCK, and SP_PCK each contain pack control information, that is, the pack header and the packet header that are followed by at least one stream packet including any one of a video stream, an audio stream, and a sub-picture stream.

The entirety or a part of the stream packets is to be masked; at least control information, such as the pack header and the packet header, is not to be masked.

By masking the content information on the video data, the audio data, the sub-picture data, and the like and by leaving the control information unchanged among the DVD video data, unauthorized playback of the content information can be prevented without causing any trouble to the operation of a video playback application program running on the PC 18, which reads the content information based on the control information, as well as to the operation of the PC 18 itself.

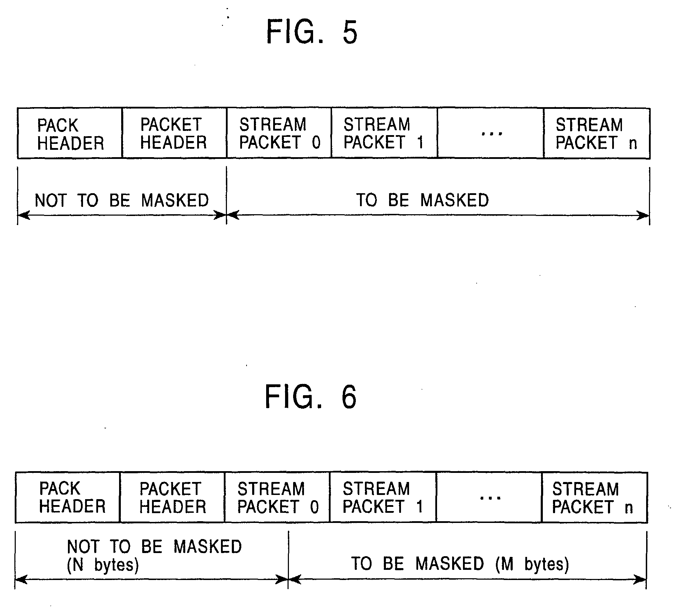

As long as no trouble is caused to the operation of the video playback application program running on the PC 18 and the operation of the PC 18, data to be masked among the DVD video data is not limited to the above example. Part of the control information may be masked. In addition, as shown in Fig. 6, masking not the entirety but a part of the stream packets suffices.

Thus, the content information with at least part thereof masked is stored in the buffer memory 17. When the data requested by the PC 18 is stored in the buffer memory 17, this data is transferred via the ATAPI I/F 14 from the buffer memory 17 to the PC 18.

Unauthorized playback of the content information can be therefore prevented on the PC 18. Since the control information required for playback of the content information is not masked, no trouble is caused to the operation of the video playback application program running on the PC 18, which plays back the content information based on the control information, and the operation of the PC 18 itself.

Next, the operation of writing to the disk 1 will be described.

The PC 18 issues a WRITE command along with the LBA of the disk 1 representing the location of data to be written and the size thereof to the CPU 19 via the ATAPI I/F 14 and the CPU I/F 15.

When the CPU 19 determines that the instruction of the WRITE command is executable, the data to be written with the specified length thereof is transferred from the PC 18 to the buffer memory 17 in units of two-kilobyte sectors.

Before writing, the CPU 19 computes PSN (Physical Sector Number), which is the actual location of the disk 1 corresponding to the LBA. In addition, the DVD-signal processing unit 9 is set up so that address information is read from the wobble signal in order to realize address detection for the position control that moves the object lens of the OP 2 to the write start position of the disk 1.

When writing starts, data to be written is fed in units of 32 kilobytes (one ECC block = 16 sectors) from the buffer memory 17 to the DVD-signal processing unit 9 (DVD encoder) via the memory controller 12 and the writing data filter 16.

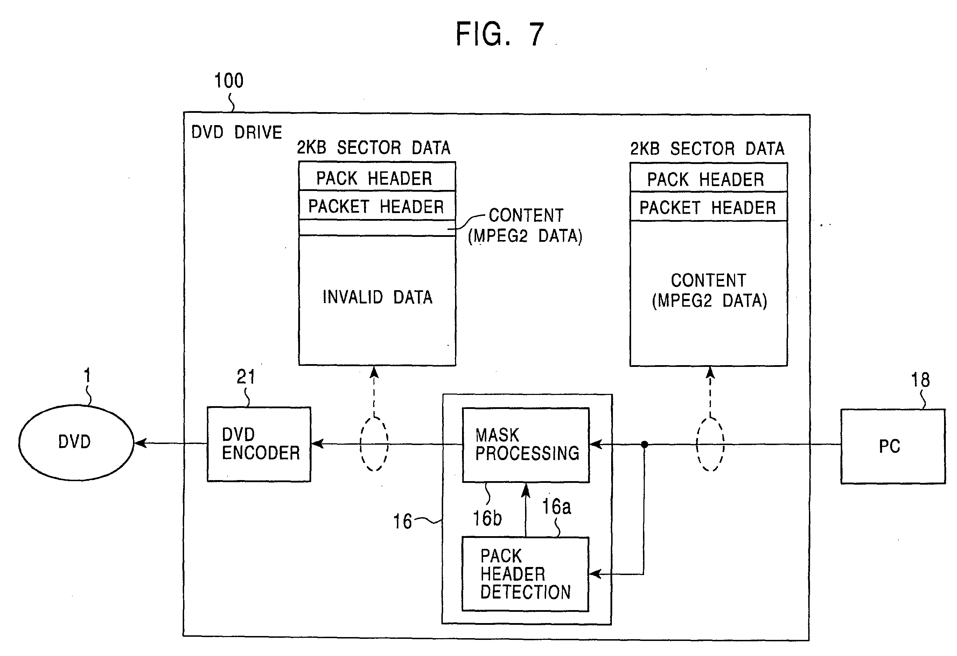

Fig. 7 shows how the writing data filter 16 works.

The writing data filter 16 includes a pack header detecting unit 16a and a mask processing unit 16b. The pack header detecting unit 16a reads the pack header from a pack transferred from the PC 18 to determine the pack type. The mask processing unit 16b performs the mask processing, such as replacing the specific type of pack determined by the pack header detecting unit 16a with invalid data.

In the same manner as in the reading data filter 13, the types of packs to be masked are the content information, such as the video data, audio data, and sub-picture data; the pack of the control information, such as NV_PCK, is transferred without undergoing the mask processing to the DVD encoder 21.

Thus, the data to be written with part of the content information masked is obtained. Subsequently, the RS-PC encoding processing and the EFM+ modulation processing are applied to the DVD encoded data that is encoded by the DVD encoder 21. The resultant EFM+ modulated signal is fed to the writing processor 4 where the writing laser power is controlled based on the EFM+ signal. Thus, writing the data to the disk 1 is performed. Since at least part of the content information is masked, attempting to read data from the disk 1 for playback fails, preventing playback of the valid content information. Unauthorized copying of the content information cannot be therefore achieved.

Furthermore, the copy protect function according to this embodiment has the following advantages.

Since the effective copyright protection can be achieved without implementing the digital watermark information, factors of preventing fast writing to and fast reading from the disk 1 can be removed, speeding up the operation. In addition, the performance uniformity of the copy protection function can be realized without increasing the cost.

Furthermore, since the pack header is detected to mask only the content information on the video data, audio data, sub-picture data, and the like, no trouble occurs when the drive is used for other types of data.

Next, other modifications of the DVD drive 100 will be described.

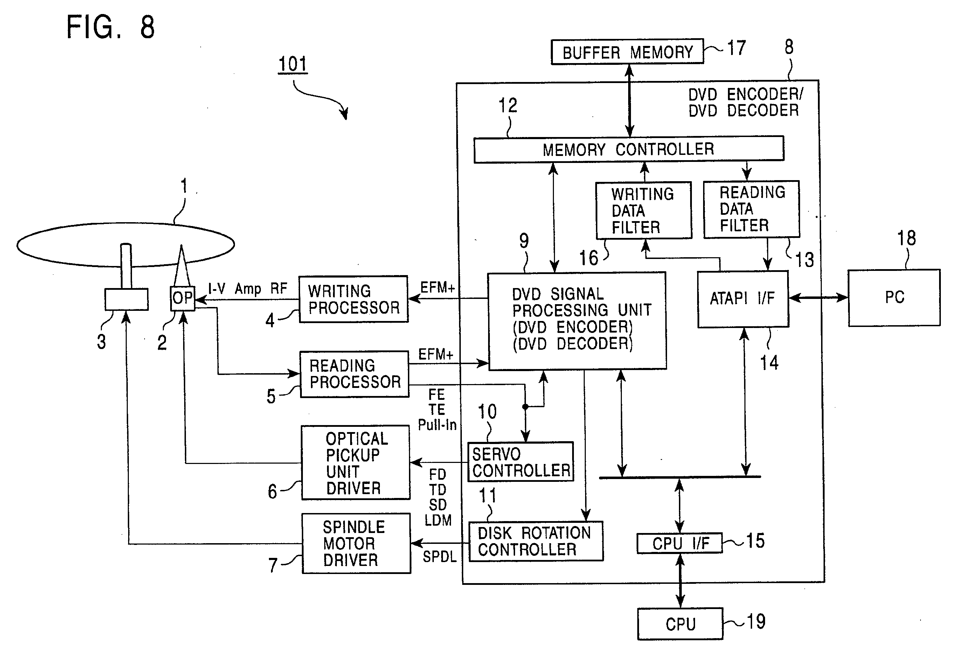

Fig. 8 shows the construction of a DVD drive 101, which differs from the DVD drive 100 in that the reading data filter 13 and the writing data filter 16 are connected between the memory controller 12 and the ATAPI I/F 14 instead of between the memory controller 12 and the DVD-signal processing unit 9. Components of the DVD drive 101 in Fig. 8 that are identical to the corresponding components of the DVD drive 100 in Fig. 1 have the same reference numerals as those of the drive 100 in Fig. 1.

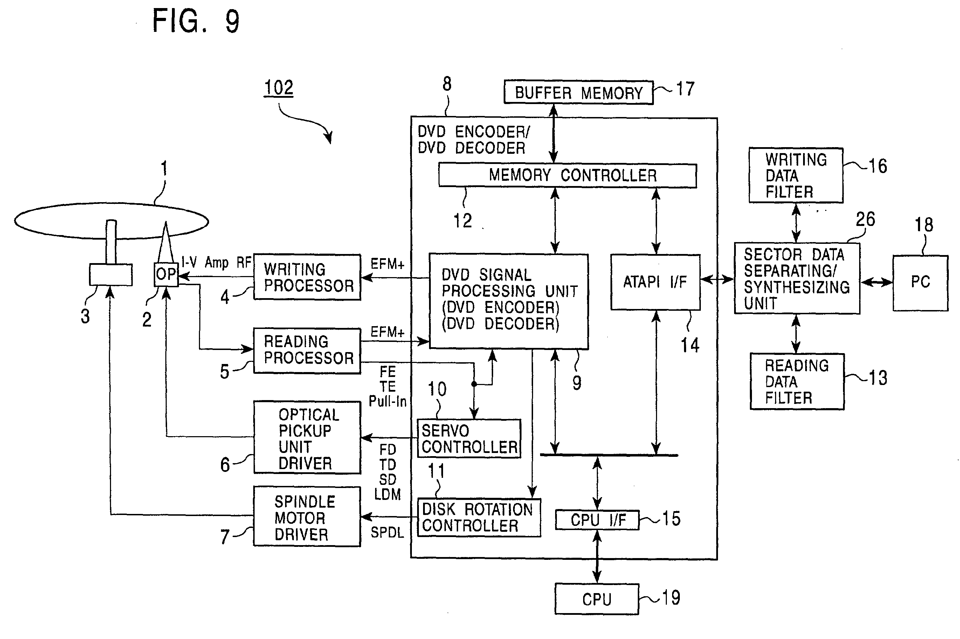

Fig. 9 shows the construction of a DVD drive 102, which is an example in which a sector data separating/synthesizing unit 26 is disposed on an ATAPI bus connected to the PC 18. The sector data separating/synthesizing unit 26 extracts data from the ATAP bus to feed to either the reading data filter 13 or the writing data filter 16 and returns the data processed by the reading data filter 13 or the writing data filter 16 to the ATAPI bus. Components of the DVD drive 102 in Fig. 9 which are identical to the corresponding components of the DVD drive 100 in Fig. 1 have the same reference numerals as those of the drive 100 in Fig. 1.

Next, a second embodiment of the present invention will be described.

In this embodiment, when a DVD drive 200 and a PC 30 exchange content information, authentication is performed between the DVD drive 200 and the PC 30. In accordance with the result of the authentication, switching occurs between a mode in which mask processing is applied to the content information in the DVD drive 200 and a mode in which the content information is encrypted and decrypted in both of the DVD drive 200 and the PC 30.

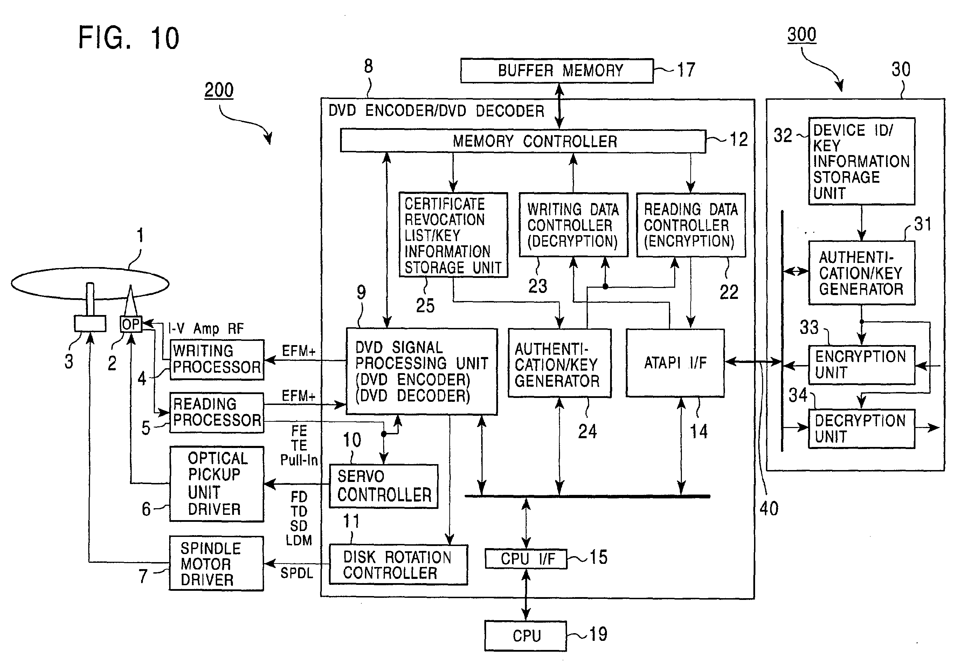

Fig. 10 shows the construction of a system 300 including the DVD drive 200 and the PC 30. Component in Fig. 10 identical to the corresponding components in Fig. 1 have the same reference numerals as those of the drive 100 in Fig. 1.

The disk 1 includes the DVD-Video Disc (DVD-ROM) protected under the CSS, the DVD-Video Disc (DVD-ROM/-R/-RW/+R/+RW) unprotected under the CSS, the disk created by the user, and the copy disk authorized as private use.

The OP 2 includes the object lens, a device for driving the object lens in biaxial directions, the laser diode, the optical detector, and the OP feed mechanism.

The spindle motor 3 applies the rotation drive to the disk 1.

The writing processor 4 controls the writing laser power over the disk 1 based on the DVD encoded EFM+ signal.

The reading processor 5 produces the DVD reading EFM+ signal, the FE signal, the TE signal, and the Pull-in signal based on based on the RF signal output from the OP 2. The FE, TE, and Pull-in signals serve for the servo control.

The OP driver 6 includes driver ICs that each drive a respective motor for focus, tracking, and loading.

The spindle motor driver 7 drives the spindle motor 3.

The DVD encoder/decoder 8 is a DVD core LSI circuit in which the features of the DVD-signal processing unit 9, the servo controller 10, the disk rotation controller 11, the memory controller 12, a reading data controller (encryption) 22, the ATAPI I/F 14, the CPU I/F 15, a writing data controller (decryption) 23, an authentication/key-generator 24, and a certificate revocation list/key-information storage unit 25 are contained in a single semiconductor package.

The DVD-signal processing unit 9 includes the RS-PC encoder/decoder, the ID processing unit for address detection, the EFM+ modulation/demodulation circuit, and the wobble detector.

When decoding is performed, data is stored via the memory controller 12 in the buffer memory 17 in units of 32 kilobytes as the output of the DVD encoder/decoder 8. The data stored in the buffer memory 17 is transferred via the memory controller 12 and the ATAPI I/F 14 to the PC 18 in units of 2 kilobytes.

When encoding is performed, data is transferred as the input of the DVD encoder/decoder 8 from the PC 30 to the buffer memory 17 via the ATAPI I/F 14 and the memory controller 12 in units of 2 kilobytes. When the size of the data stored in the buffer memory 17 reaches 32 kilobytes, which is the size of the data block writing to the disk 1, the memory controller 12 transfers the data to the DVD-signal processing unit 9.

The servo controller 10 performs servo-control signal processing including focus, tracking, and sled, as well as loading control.

The disk rotation controller 11 controls rotation of the disk 1 based on the signal fed from the DVD-signal processing unit 9.

The memory controller 12 arbitrates the memory access.

The ATAPI I/F 14 serves as an interface with a host, i.e. the PC 30. In place of ATAPI, the interface may be SCSI, USB, or IEEE 1394.

The CPU I/F 15 serves as an interface between the DVD encoder/decoder 8 and the CPU 19.

The CPU 19 controls the DVD drive 200.

The buffer memory 17 serves as a fast read-write space utilized for DVD signal processing and efficient fast data transfer between the PC 30 and the DVD drive 200.

The reading data controller (encryption) 22 performs mask processing, such as replacing at least part of the content information with invalid data, and encryption processing so that playback of the content information read from the disk 1 is invalidated on the PC 30.

The writing data controller (decryption) 23 performs mask processing, such as replacing at least part of the content information to be written with invalid data, and decryption processing so that playback of the content information written to the disk 1 is invalidated on the PC 30.

The PC 30 serves as the host connected to the DVD drive 200.

The authentication/key generator 24 performs authentication with the PC 30 to generate a content key that is used for encrypting and decrypting the content information.

The certificate revocation list/key information storage unit 25 stores a certificate revocation list used during authentication and various types of keys acquired during authentication.

A content information reading application running on the PC 30 includes an authentication/key generator 31, a device ID/key information storage unit 32, an encryption unit 33, and a decryption unit 34.

The authentication/key generator 31 performs authentication with the DVD drive 200 to generate the content key used for encrypting and decrypting the content information.

The device ID/key information storage unit 32 stores the device IDs and various types of acquired keys.

The encryption unit 33 encrypts at least part of the content information to be written that is transferred to the DVD drive 200.

The decryption unit 34 decrypts the encrypted content information transferred from the DVD drive 200.

Next, the operation of exchanging the content information between the DVD drive 200 and the PC 30 will be described.

First, the operation will be described when the content information is transferred from the DVD drive 200 to the PC 30.

The content information reading application running on the PC 30 performs authentication with the DVD 200 before reading the content information stored on the disk 1. When the authentication is successful, the PC 30 and the DVD drive 200 generate content keys that are common keys for encrypting and decrypting the content information. The authentication and the content key generation will be described in detail.

After the authentication, the PC 30 issues the READ command along with the LBA of the disk 1 representing the location of the data to be read and the size thereof to the CPU 19 via the ATAPI I/F 14 and the CPU I/F 15.

When determining that the instruction of the read command is executable, the CPU 19 determines whether the data having the specified data length is stored in the buffer memory 17; when the determination is affirmative, the data is transferred via the ATAPI I/F 14 to the PC 18 in units of two-kilobyte sectors; otherwise, the CPU 19 computes the PSN (Physical Sector Number), i.e. the actual address of the data to be read on the disk 1 corresponding to the LBA. This permits position control that moves the object lens of the OP 2 to the read-start position of the disk 1.

Thereafter, the DVD-signal processing unit 9 deals with the data read from the specified PSN of the disk 1 in the following manner.

The DVD-signal processing unit 9 performs DVD decoding processing in units of ECC blocks, i.e. 16 sectors. The DVD-decoded sixteen sectors of data are stored in the buffer memory 17 via the memory controller 12.

When the data requested by the PC 30 is stored in the buffer memory 17, the data is transferred in units of two-kilobyte sectors from the buffer memory 17 to the PC 30 via the reading data controller (encryption) 22, the ATAPI I/F 14, and an external connection bus 40.

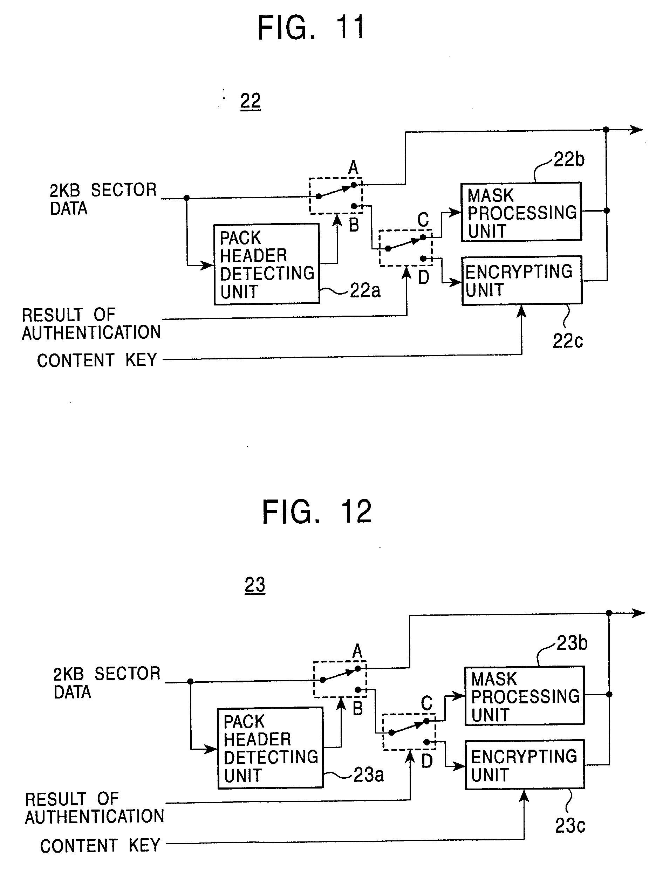

The reading data controller (encryption) 22 will be described in details. As shown in Fig. 11, the reading data controller (encryption) 22 includes a pack header detecting unit 22a, a mask processing unit 22b, and an encrypting unit 22c. The pack header detecting unit 22a determines the type of a reading pack by detecting the pack header from the pack. The mask processing unit 22b performs the mask processing, such as replacing the specific type of pack determined by the pack header detecting unit 22a with invalid data. The encrypting unit 22c encrypts the specific type of pack determined by the pack header detecting unit 22a.

When the authentication is successful and the content key is acquired, the reading data controller (encryption) 22 causes the encrypting unit 22c to encrypt, using the content key, the specific type of pack detected by the pack header detecting unit 22a. The specific type of pack may be a pack of the content information on the video data, the audio data, or the sub-picture data. Alternatively, when the authentication is successful, all the data to be transferred may be encrypted without detection of the pack header.

When the authentication fails, the reading data controller (encryption) 22 causes the mask processing unit 22b to perform the mask processing on the specific type of pack determined by the pack header detecting unit 22a. The mask processing is described above.

Thus, the encrypted or mask-processed content information is transferred via the ATAPI I/F 14 and the external connection bus 40 to the PC 30.

When the encrypted content information is provided to the content information reading application running on the PC 30, the content information reading application causes the decryption unit 34 to decrypt the encrypted content information with the acquired content key.

The decrypted content information is provided to a content playback application (not shown) running on the PC 30 where the content information is played back.

As described above, the content information is encrypted on the DVD drive 200, and the encrypted content information is transferred from the DVD drive 200 to the PC 30 where the encrypted content information is decrypted.

Next, the operation will be described when the content information is transferred from the PC 30 to the DVD drive 200.

The PC 30 issues the WRITE command along with the LBA of the disk 1 representing the location of data to be written and the size thereof to the CPU 19 via the ATAPI I/F 14 and the CPU I/F 15.

When the CPU 19 determines that the instruction of the WRITE command is executable, the data to be written with the specified length thereof is transferred from the PC 30 to the buffer memory 17 in units of two-kilobyte sectors.

The content information reading application running on the PC 30 causes the encryption unit 33 to encrypt the data to be written with the content key acquired through the authentication with the DVD drive 200. When the data to be written is a pack in conformity with the DVD-Video standard specifications or the DVD-Video Recording standard specifications, the encryption unit 33 determines the pack including the content information, such as the video data, the audio data, and the sub-picture data based on the pack header of the pack to encrypt at least part of the pack. The encrypted content information is transferred to the DVD drive 200 via the external connection bus 40.

In the DVD drive 200, the content information provided via the external connection bus 40 from the PC 30 is fed via the ATAPI I/F 14 to the writing data controller (decryption) 23 where the encrypted content information is decrypted. The decrypted content information is stored via the memory controller 12 in the buffer memory 17.

The writing data controller (decryption) 23 will be described in details. As shown in Fig. 12, the writing data controller (decryption) 23 includes a pack header detecting unit 23a, a mask processing unit 23b, and a decrypting unit 23c. The pack header detecting unit 23a determines the type of a writing pack by detecting the pack header from the pack. The mask processing unit 23b performs the mask processing, such as replacing the specific type of pack determined by the pack header detecting unit 23a with invalid data. The decrypting unit 23c decrypts the specific type of pack determined by the pack header detecting unit 23a.

When the authentication is successful and the content key is acquired, the writing data controller (decryption) 23 causes the decrypting unit 23c to decrypt, using the content key, the specific type of pack detected by the pack header detecting unit 23a, that is, the encrypted content information.

When the authentication fails, the writing data controller (decryption) 23 causes the mask processing unit 23b to perform the mask processing on the specific type of pack determined by the pack header detecting unit 23a. The mask processing is described above.

When writing to the disk 1 starts, the writing data is fed to the DVD-signal processing unit 9 (DVD encoder) via the memory controller 12 in units of 32 kilobytes (one ECC block = 16 sectors).

The DVD-signal processing unit 9 (DVD encoder) applies the RS-PC encoding processing and the EFM+ modulation processing, and the like to the DVD encoded writing data, and the resultant EFM+ signal is provided to the writing processor 4. The writing processor 4 controls the laser power of the OP 2 based on the EFM⁺ signal. Writing to the disk 1 is performed thus.

Therefore, when the authentication is successful, the content information is stored in the disk 1; otherwise, the data with the masked content information is stored. Accordingly, unauthorized copying of the content information to be protected under copyright to media can be prevented. In addition, since the content information going through the external connection bus 40 is encrypted, even though the content information is captured using a bus trace or the like, the information cannot be played back as the valid content.

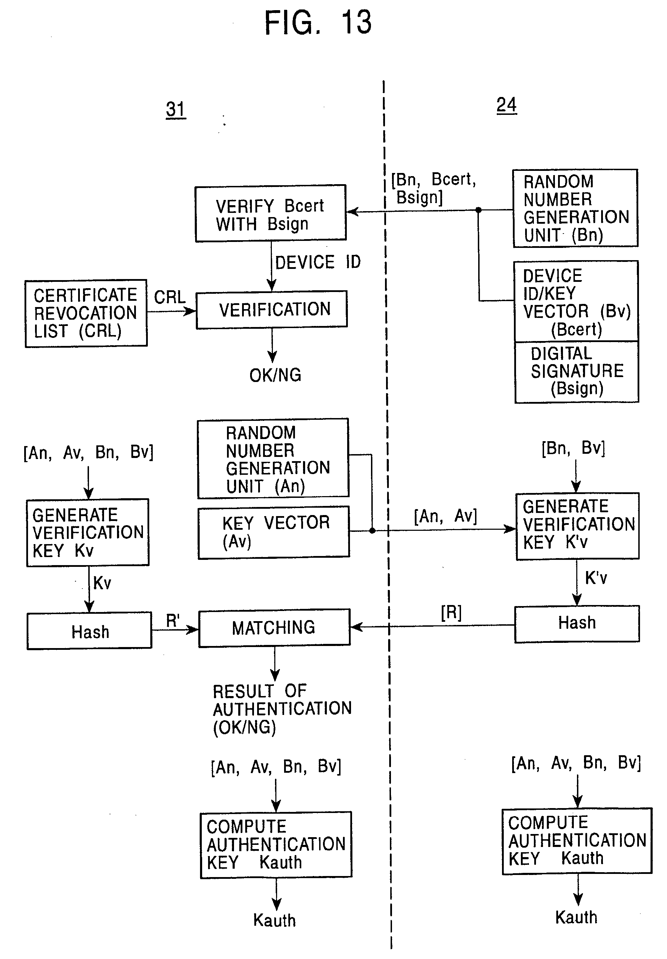

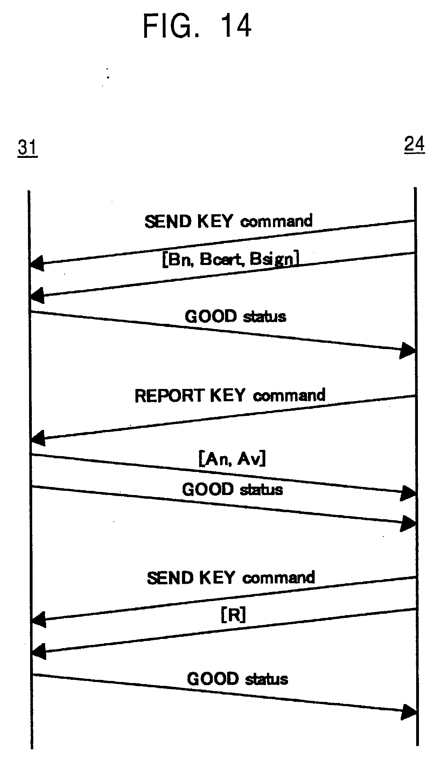

The authentication and key generation at both of the PC 30 and the DVD drive 200 are described with reference to Figs. 13 and 14.

The authentication/key generator 31 of the PC 30 (hereinafter, referred to as "PC end") transfers a random number B_{n,} a B_{cert} including the device ID and a key vector Bᵥ, and a digital signature B_{sign} authenticating the B_{cert} to the authentication/key generator 24 (hereinafter, referred to as "drive end"). The transfer may be triggered by a "SEND KEY" command defined in "SCSI Multimedia Commands-3(MMC3)" specifications, which are standard command specifications of the DVD drive.

The drive end that receives the data authenticates the B_{cert} using the digital signature B_{sign}. When the validity of the B_{cert} is verified, the device ID is obtained from the B_{cert} to verify whether or not the device ID is registered in the certificate revocation list (hereinafter, referred to as CRL) stored in the certification revocation list/key information storage unit 25. When the device ID is not registered in the CRL, the SEND_KEY command exits with, for example, a GOOD status (OK). On the other hand, when the B_{cert} is not verified, or when the device ID is registered in the CRL, the SEND_KEY command exits with, for example, a CHECK_CONDITION status (NG).

Next, the drive end transfers the random number An and the key vector Aᵥ to the PC end. This operation is realized by issuing a REPORT_KEY command defined in the MMC3 specifications and the like to request data transfer to the drive end.

When the above verification is successful (for, example, the SEND_KEY command exits with the GOOD status), the drive end terminates the REPORT_KEY command with the GOOD status; otherwise, the drive end terminates the REPORT_KEY command with the CHECK_CONDITION status.

When the REPORT_KEY is executed successfully, the PC end generates the verification key K'ᵥ based on [Aₙ, Aᵥ] received from the drive end and [Bₙ, Bᵥ] held in the PC end. A value R is obtained by applying a predetermined hash function to the produced verification key K'ᵥ and is transferred to the drive end using, for example, the SEND_KEY command.

The drive end generates the verification key Kᵥ based on [Aₙ, Aᵥ, Bₙ, Bᵥ] held in the drive. A value R' is obtained by applying the predetermined hash function to the verification key Kᵥ. The value R' computed by the drive end and the value R received from the PC end are compared. When these values are matched, for example, the drive end terminates the SEND_KEY command with the GOOD status to let the PC end know the authentication completes; when these values aren't matched, for example, the drive end terminates the SEND_KEY command with the CHECK_CONDITION status. Fig. 14 shows how the PC end and the drive end exchange the commands when the above authentication process is successful.

For example, the SEND_KEY command exits with the GOOD status in the above process, which means that it is verified that the PC end and the drive end have the same [Aₙ, Aᵥ, Bₙ, Bᵥ]. The authentication keys Kₐᵤₜₕ are computed in respective predetermined manners on both ends.

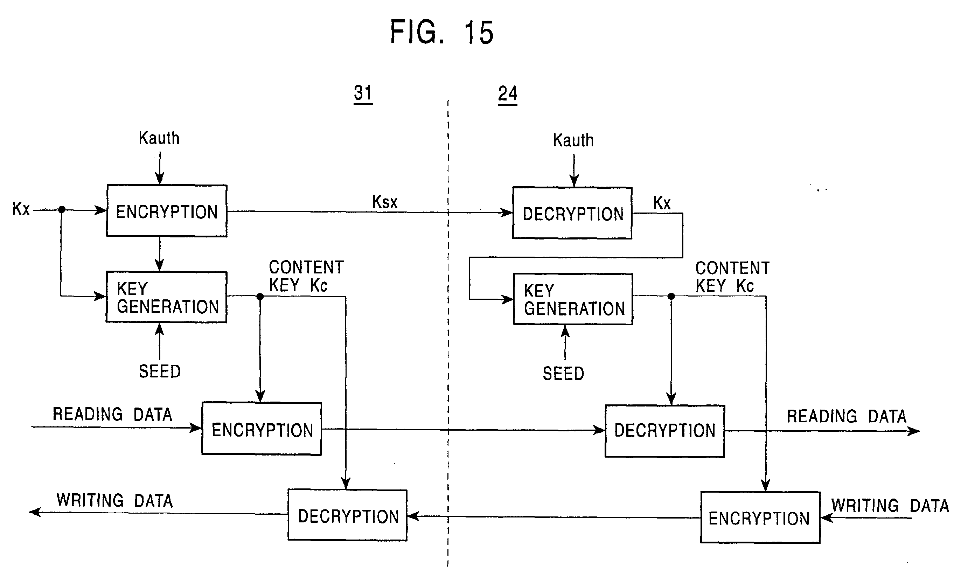

With reference to Fig. 15 will be described one example of how the content key is generated after generation of the authentication key Kₐᵤₜₕ.

After the authentication key is generated, a key Kₓ required for generating the content key is transferred from the drive end to the PC end. This key Kₓ is encrypted with the authentication key Kₐᵤₜₕ into a key Kₛₓ, which is transferred to the PC end. The key Kₓ may be a fixed value stored in the drive end, a value generated in the drive end with a random number so that the key Kₓ takes a different value whenever being required, or a value using data regarding a specific location stored in the drive 1.

A method with which the PC end requests the key Kₓ of the drive end may be the one using the REPORT_KEY command. When the key Kₓ is stored in the disk 1, the method may be the one using a READ_DVD_STRUCTURE command defined in the MMC3 specifications.

After the drive end and the PC end have the same key Kₓ, the content keys K_{c} are generated based on a predetermined seed value and values computed based on the keys Kₓ and Kₐᵤₜₕ on both of the drive end and the PC end. The content information is encrypted and decrypted using the content key K_{c} on both the drive end and the PC end.

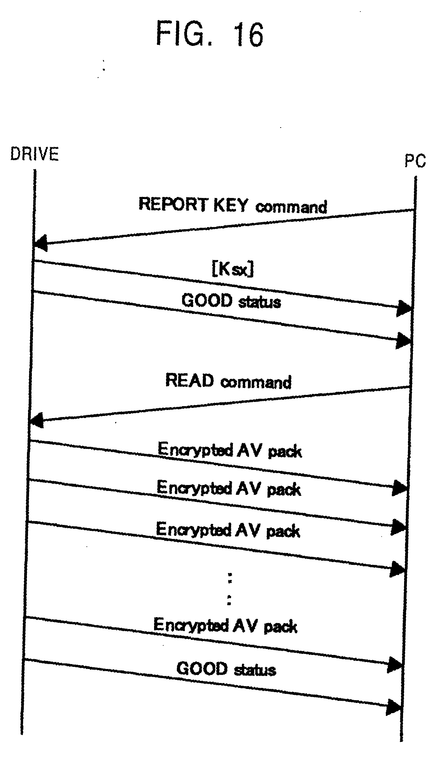

Fig. 16 shows how the PC end and the drive end exchange the commands during reading processing. The PC end requests the key Kₓ of the drive end using the REPORT_KEY command. In response to this request, the drive end returns the Kₛₓ, obtained by encrypting the key Kₓ using the authentication key Kₐᵤₜₕ, with the GOOD status to the PC end. The PC end issues the READ command to the drive end, which feeds the encrypted content information to the PC end in return.

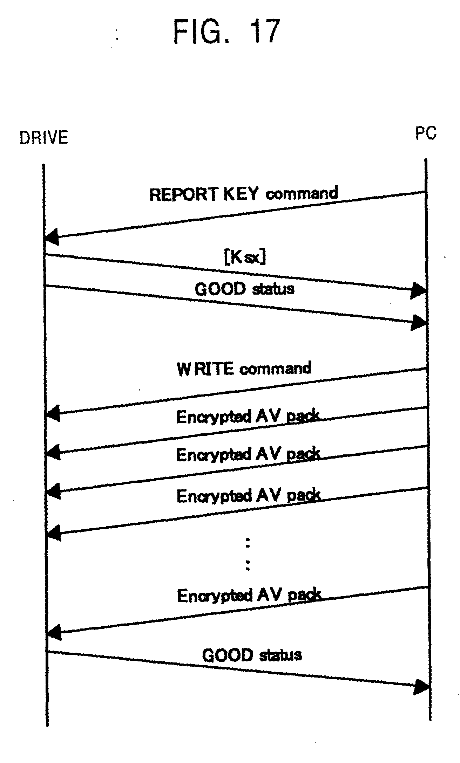

Fig. 17 shows how the PC end and the drive end exchange the commands during writing processing. The PC end requests the key Kₓ of the drive end using the REPORT_KEY command. In response to this request, the drive end returns the Kₛₓ, obtained by encrypting the key Kₓ using the authentication key Kₐᵤₜₕ, with the GOOD status to the PC end, which issues the WRITE command to the drive end in return to transfer the encrypted content information to the drive end.

According to the present CSS agreement, the DVD drive is not supposed to transfer data from the disk under the CSS protection to the PC until the CSS authentication completes. However, after the CSS authentication is performed at least once by operating the DVD drive and running the DVD playback application program, quitting the DVD playback application program may enable the data stored in the DVD disk protected under the CSS to be copied to a storage medium, such as a hard disk. In addition, use of programs decrypting the CSS encryption code may cause the protection of the copyright of the content information to fail.

On the other hand, according to the mechanism of encrypted content information exchange between the DVD drive and the PC of the present embodiment, even though copying of the content information is attempted from the DVD drive 200 to another medium of the PC 30, such as the hard disk, since the content key for decrypting the encrypted content information cannot be obtained without authentication between the PC 30 and the DVD 200, the copyright of the content information can be protected more securely.

In addition, according to the mechanism of encrypted information exchange between the DVD drive and the PC of the present embodiment, the key Kₓ required for generating the content key is transferred from the drive end to the PC end after generation of the authentication key. Using the key Kₓ taking a different value whenever the authentication occurs, such as a value generated based on a random number prepared in the drive end or a value employing data regarding the specific location stored in the disk 1, the destruction of the content information data due to the leakage of the content key data can be effectively prevented.

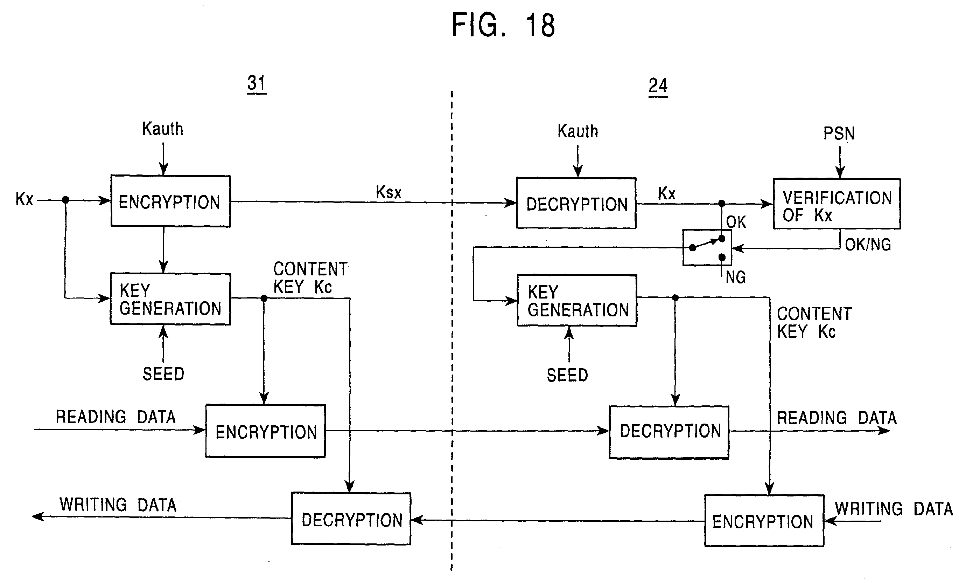

When a value employing data regarding the specific location stored in the disk 1 is used as the key Kₓ required for generating the content key, as shown in Fig. 18, the value of the key Kₓ is obtained by being associated with the corresponding PSN stored in the disk 1, so that the validity of the key Kₓ can be verified. When the validity is verified, the key Kₓ is transferred; otherwise, an appropriate value, such as zero, is transferred.

Example methods that verify the validity of the key Kₓ will be described.

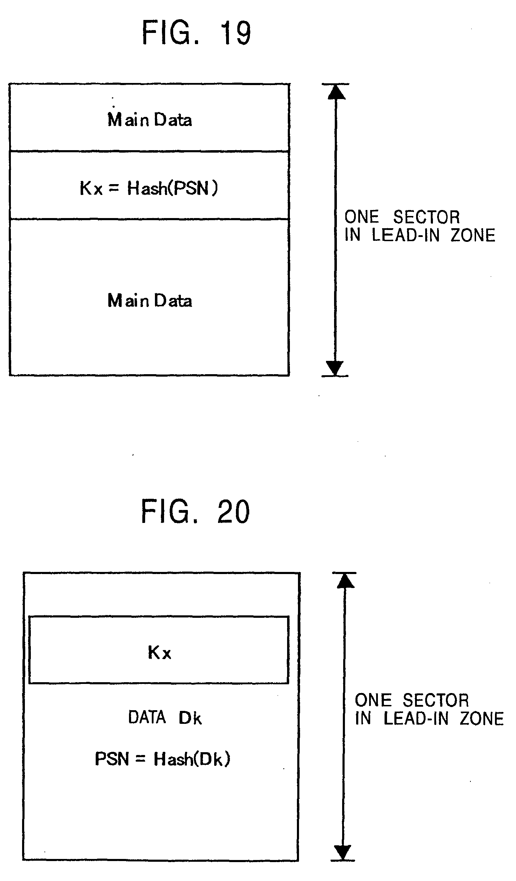

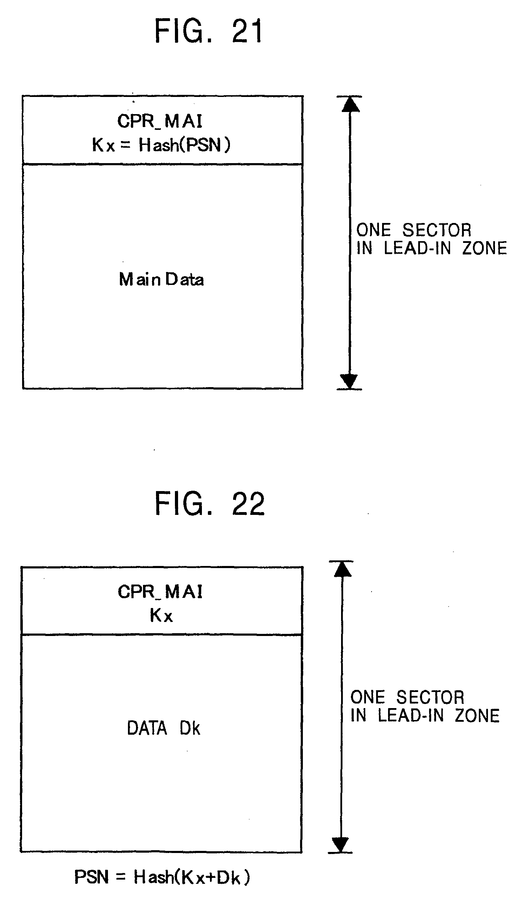

Fig. 19 shows methods in which the hash value of the physical address PSN of a sector is assigned to the value of the key Kₓ, which is stored in a predetermined location of the sector. Fig. 20 shows a method in which the key Kₓ is stored in a predetermined location of a sector and the hash value of all data Dₖ of the sector is assigned to the physical address PSN of the sector. Fig. 21 shows a method in which the hash value of the physical address PSN of a sector is assigned to the value of the key Kₓ, which is stored in the CPR_MAI of the sector. Fig. 22 shows a method in which the key Kₓ is stored in the CPR_MAI of a sector and the hash value of all data Dₖ of the sector and the key Kₓ are associated with the physical address PSN of the sector. In the above methods, the physical address PSN is randomly issued whenever the PC performs authenticating processing in a predetermined region of a lead-in zone of the disk 1 where the key Kₓ is stored.

## Claims

1. An information reading apparatus comprising:
reading means for reading information from a storage medium storing information;
read information processing means for replacing at least part of the information read by the reading means with invalid data; and
transferring means for transferring the information, at least partially replaced with the invalid data, to an electronic apparatus that requests reading of information from the storage medium.

2. The information reading apparatus according to Claim 1, wherein:
the storage medium stores the information including main information and control information, the main information including video and/or audio to be played back, the control information being required for playback of the main information; and
the read information processing means replaces at least part of the information other than the control information with the invalid data.

3. The information reading apparatus according to Claim 1, further comprising authenticating means for performing authentication with the electronic apparatus that requests reading of information, wherein the read information processing means replaces at least part of the information read by the reading means with the invalid data when the authenticating means fails in the authentication.

4. The information reading apparatus according to Claim 3, further comprising encrypting means for encrypting at least part of the information read by the reading means and for transferring said at least partially encrypted information to the electronic apparatus when the authenticating means succeeds in the authentication.

5. The information reading apparatus according to Claim 4, wherein the encrypting means performs encryption using a different key that is generated whenever the authenticating means performs authentication.

6. An information recording apparatus comprising:
recording means for recording information to a storage medium; and
recording information processing means for replacing at least part of the information to be recorded on the storage medium by the recording means with invalid data.

7. The information recording apparatus according to Claim 6, wherein when the information including main information and control information is recorded on the storage medium, the recording information processing means replaces at least part of the information other than the control information with the invalid data, the main information including video and/or audio to be played back, the control information being required for playback of the main information.

8. The information recording apparatus according to Claim 6, further comprising authenticating means for performing authentication with an electronic apparatus that requests recording of information, wherein the recording information processing means replaces at least part of the information to be recorded by the recording means with the invalid data when the authenticating means fails in the authentication.

9. The information recording apparatus according to Claim 8, further comprising decrypting means for decrypting encrypted information transferred by the electronic apparatus when the authenticating means succeeds in the authentication.

10. The information recording apparatus according to Claim 9, wherein the decrypting means performs decryption using a different key that is generated whenever the authenticating means performs authentication.

11. An optical reproducing apparatus comprising:
an optical pickup unit for reading information from an optical storage medium storing information;
a data filter for replacing at least part of information read by the optical pickup unit with invalid data; and
an interface for transferring the information at least partially replaced with the invalid data to an electronic apparatus that requests reading of information from the optical storage medium.

12. The optical reproducing apparatus according to Claim 11, wherein:
the optical storage medium stores the information including main information and control information, the main information including video and/or audio to be played back, the control information being required for playback of the main information; and
the data filter replaces at least part of the information other than the control information with the invalid data.

13. The optical reproducing apparatus according to Claim 11, further comprising an authenticating unit for performing authentication with the electronic apparatus that requests reading of information, wherein the data filter replaces at least part of the information read by the optical pickup unit with the invalid data when the authenticating unit fails in the authentication.

14. The optical reproducing apparatus according to Claim 13, further comprising an encrypting unit for encrypting at least part of the information read by the optical pickup unit when the authenticating unit succeeds in the authentication.

15. The optical reproducing apparatus according to Claim 14, wherein the encrypting unit performs encryption using a different key that is generated whenever the authenticating unit performs authentication.

16. An optical recording apparatus comprising:
an interface for receiving information from an electronic apparatus that requests recording of information;
a data filter for replacing at least part of the received information with invalid data; and
an optical head unit for recording the information at least partially replaced with the invalid data to an optical storage medium.

17. The optical recording apparatus according to Claim 16, wherein when the information including main information and control information is recorded on the storage medium, the data filter replaces at least part of the information other than the control information with the invalid data, the main information including video and/or audio to be played back, the control information being required for playback of the main information.

18. The optical recording apparatus according to Claim 16, further comprising an authenticating unit for performing authentication with the electronic apparatus that requests recording of information, wherein the data filter replaces at least part of the information to be recorded by the optical head unit with the invalid data when the authenticating unit fails in the authentication.

19. The optical recording apparatus according to Claim 18, further comprising a decrypting unit for decrypting encrypted information transferred by the electronic apparatus when the authenticating unit succeeds in the authentication.

20. The optical recording apparatus according to Claim 19, wherein the decrypting unit performs decryption using a different key that is generated whenever the authenticating unit performs authentication.

21. An information reading method comprising:
a reading step of reading information from a storage medium storing information;
a read information processing step of processing the information read at the reading step so that playback of the information is invalidated at an electronic apparatus requesting reading of information; and
a transferring step of transferring the processed information to the electronic apparatus.

22. The information reading method according to Claim 21, wherein at least part of information is replaced with invalid data at the read information processing step.

23. The information reading method according to Claim 21, wherein when the storage medium stores the information including main information and control information, at least part of the information other than the control information is replaced with the invalid data at the read information processing step, the main information including video and/or audio to be played back, the control information being required for playback of the main information.

24. The information reading method according to Claim 21, further comprising an authenticating step of performing authentication with the electronic apparatus requesting reading of information, wherein when the authentication fails at the authenticating step, the information read from the storage medium at the reading step is processed at the read information processing step so that playback of the information is invalidated.

25. The information reading method according to Claim 24, further comprising an encrypting step for encrypting at least part of the information read from the storage medium at the reading step and for transferring said at least partially encrypted information to the electronic apparatus when the authentication succeeds at the authenticating step.

26. The information reading method according to Claim 25, wherein encryption is performed at the encrypting unit using a different key that is generated whenever authentication is performed at the authenticating step.

27. An information recording method comprising:
a recording information processing step of processing the information to be recorded so that playback of the information to be recorded on a storage medium is invalidated; and
a recording step of recording information to the storage medium.

28. The information recording method according to Claim 27, wherein at least part of the information is replaced with invalid data at the recording information processing step.

29. The information recording method according to Claim 27, wherein when the information including main information and control information is recorded on the storage medium, at least part of the information other than the control information is replaced with the invalid data at the recording information processing step, the main information including video and/or audio to be played back, the control information being required for playback of the main information.

30. The information recording method according to Claim 27, further comprising an authenticating step for performing authentication with an electronic apparatus that requests recording of information, wherein the information to be recorded on the storage medium is processed at the recording information processing step so that playback of the information to be recorded on the storage medium is invalidated when the authentication fails at the authenticating step.

31. The information recording method according to Claim 30, further comprising a decrypting step for decrypting encrypted information transferred by the electronic apparatus when the authentication succeeds at the authenticating step.

32. The information recording method according to Claim 31, wherein decryption is performed at the decrypting step using a different key that is generated whenever the authentication is performed at the authenticating step.

33. A program for causing a computer to realize functions of:
performing authentication with an information recording apparatus recording information including video and/or audio to a storage medium;
encrypting at least part of the information to be transferred to the information recording apparatus when the authentication succeeds; and
transferring the encrypted information to the information recording apparatus so that the encrypted information is recorded on the storage medium.

34. A program for causing a computer to realize functions of:
performing authentication with an information reading apparatus reading information including video and/or audio from a storage medium; and
decrypting encrypted information transferred from the information reading apparatus when the authentication succeeds.

35. A computer-readable storage medium containing a program for causing a computer to realize functions of:
performing authentication with an information recording apparatus recording information including video and/or audio to a storage medium;
encrypting at least part of the information to be transferred to the information recording apparatus when the authentication succeeds; and
transferring the encrypted information to the information recording apparatus so that the encrypted information is recorded on the storage medium.

36. A computer-readable storage medium containing a program for causing a computer to realize functions of:
performing authentication with an information reading apparatus reading information including video and/or audio from a storage medium; and
decrypting encrypted information transferred from the information reading apparatus when the authentication succeeds.
